# EUROPEAN PATENT APPLICATION

(11) **EP 4 815 089 A1**
(43) Date of publication of application: **30.09.2026**
(21) Application number: 26162814.3
(22) Date of filing: 06.03.2026
(51) Int. Cl.: H01M 10/056, H01M 50/44, H01M 50/491, H01M 50/494

(54) **SOLID ELECTROLYTE SHEET AND ALL-SOLID-STATE BATTERY**

(30) Priority: 28.03.2025 JP 2025057270
(71) Applicant: Toyota Jidosha Kabushiki Kaisha, Toyota-shi, Aichi-ken 471-8571 (JP)
(72) Inventor: YAMAMOTO, Emi, Toyota-shi, Aichi-ken, 471-8571 (JP)
(74) Representative: Winter, Brandl - Partnerschaft mbB

(57) **Abstract**

A solid electrolyte sheet includes: a support (117) that is a nonwoven fabric with an average fiber diameter larger than 6.0 µm and less than 16.0 µm, the average fiber diameter including a fiber diameter of a fiber assembly portion (12A. 12B) in which a plurality of fibers (10) is agglomerated or fused; and a solid electrolyte supported by the support (117). An all-solid-state battery includes a positive electrode layer (C), a negative electrode layer (A), and a solid electrolyte layer (B) disposed between the positive electrode layer (C) and the negative electrode layer (A). The solid electrolyte layer (B) includes the solid electrolyte sheet.

## Description

### BACKGROUND OF THE INVENTION

### 1. Field of the Invention

The present disclosure relates to a solid electrolyte sheet and an all-solid-state battery.

### 2. Description of Related Art

As lithium-ion secondary batteries excellent in safety, all-solid-state batteries having a solid electrolyte layer are known. Japanese Unexamined Patent Application Publication No. 2024-18552 (JP 2024-18552 A) discloses a solid electrolyte sheet used for a solid electrolyte layer. The solid electrolyte sheet disclosed in JP 2024-18552 A includes a nonwoven fabric and a solid electrolyte disposed in the interior of the nonwoven fabric. The nonwoven fabric has a pore diameter of 15 µm or less, and the ratio of the pore diameter to the particle diameter of the solid electrolyte (pore diameter/particle diameter) is 5.0 or more.

### SUMMARY OF THE INVENTION

A solid electrolyte sheet including a nonwoven fabric as a support can have increased strength as a membrane because of the support (nonwoven fabric), but the nonwoven fabric is an insulating material and therefore impairs ion conductivity. The solid electrolyte sheet disclosed in JP 2024-18552 A takes it into consideration that the occurrence of short circuit is prevented even if metallic foreign matter is mixed into an all-solid-state battery in addition to a reduction in battery resistance. However, a balance between battery resistance and strength is not disclosed.

The present disclosure provides a solid electrolyte sheet that can reduce battery resistance and has high strength. The present disclosure provides an all-solid-state battery that has reduced battery resistance and high strength.

A first aspect of the present disclosure relates to a solid electrolyte sheet including: a support that is a nonwoven fabric with an average fiber diameter larger than 6.0 µm and less than 16.0 µm, the average fiber diameter including a fiber diameter of a fiber assembly portion in which a plurality of fibers is agglomerated or fused; and a solid electrolyte supported by the support.

In the solid electrolyte sheet according to the first aspect, the average fiber diameter may be 6.5 µm or more and 13.5 µm or less.

In the solid electrolyte sheet according to the first aspect, the solid electrolyte may contain a sulfide solid electrolyte.

The solid electrolyte sheet according to the first aspect may have a strength of 1.0 N/5 mm or more and 3.0 N/5 mm or less.

In the solid electrolyte sheet according to the first aspect, a ratio of a volume of the support to a volume of the solid electrolyte sheet may be 30% or less.

In the solid electrolyte sheet according to the first aspect, the support may have a mass per unit area of 1 g/m² or more and 10 g/m² or less.

A second aspect of the present disclosure relates to an all-solid-state battery including: a positive electrode layer; a negative electrode layer; and a solid electrolyte layer disposed between the positive electrode layer and the negative electrode layer. The solid electrolyte layer includes the solid electrolyte sheet according to the first aspect.

An embodiment of the present disclosure provides a solid electrolyte sheet that can reduce battery resistance and has high strength. Another embodiment of the present disclosure provides an all-solid-state battery that has reduced battery resistance and high strength.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram for illustrating a method for measuring the fiber diameter of a nonwoven fabric as a support of a solid electrolyte sheet of the present disclosure;
FIG. 2 is a schematic sectional view showing an example of the configuration of an all-solid-state battery of the present disclosure; and
FIG. 3 is a graph showing a relationship among the average fiber diameter of a nonwoven fabric included in a solid electrolyte sheet, strength, and resistance.

### DETAILED DESCRIPTION OF EMBODIMENTS

In the present disclosure, a numerical range expressed using "to" means a range including numerical values before and after "to" as a minimum value and a maximum value, respectively. In numerical ranges described stepwise in the present disclosure, an upper limit or a lower limit described in a certain numerical range may be replaced with an upper limit or a lower limit of another numerical range described stepwise. In numerical ranges described in the present disclosure, an upper limit or a lower limit described in a certain numerical range may be replaced with a value shown in Examples. In the present disclosure, a combination of two or more preferred modes is a more preferred mode. In the present disclosure, when a plurality of substances corresponding to each component is present, the amount of each component means the total amount of the substances, unless otherwise specified. In the present disclosure, the term "step" may refer not only to an independent step but also to a step that cannot clearly be distinguished from another step as long as the intended purpose of the step is achieved. In the present disclosure, a "solid electrolyte" means an electrolyte that is kept as a solid at 25°C in a nitrogen atmosphere.

### Solid Electrolyte Sheet

A solid electrolyte sheet of the present disclosure includes a support that is a nonwoven fabric and a solid electrolyte supported by the support. The support is a nonwoven fabric with an average fiber diameter larger than 6.0 µm and less than 16.0 µm, the average fiber diameter including a fiber diameter of a fiber assembly portion in which a plurality of fibers is agglomerated or fused.

The solid electrolyte sheet of the present disclosure has such a configuration as described above and therefore has high strength and can reduce battery resistance. The reason for this effect is presumed as follows but is not limited thereto.

The inventor of the present disclosure has found that when solid electrolyte sheets are produced using, as a support for a solid electrolyte, nonwoven fabrics using the same fibrous material and having the same mass per unit area, the assembly state of fibers of a nonwoven fabric greatly influences the strength of the nonwoven fabric and resistance. It is considered that in the nonwoven fabric of the solid electrolyte sheet, fiber clumps in which fibers are clumped together in a planar direction due to fiber agglomeration, fusion, or the like partially reduce the fillability of a slurry, and further path behavior such that ions go around clumps of insulating fibers increases resistance. Further, the solid electrolyte sheet has higher strength when fibers of the nonwoven fabric that supports the solid electrolyte are thicker or the fibers are agglomerated to some extent, and when the fibers are too thin, the strength of the solid electrolyte sheet is impaired. In the nonwoven fabric, a fiber assembly portion is present in which a plurality of fibers is assembled by agglomeration or fusion. The fiber assembly portion in the nonwoven fabric contributes to an increase in the strength of the solid electrolyte sheet but leads to an increase in battery resistance due to inhibition of ion conduction in a solid electrolyte layer. It is expected that when an average fiber diameter, which is calculated by regarding a fiber assembly portion as one fiber and measuring not only the fiber diameter of a single fiber constituting the nonwoven fabric but also the fiber diameter of a fiber assembly portion, falls within a predetermined range, the solid electrolyte sheet achieves a good balance between an increase in strength and a reduction in resistance. Further, it is expected that when the solid electrolyte sheet of the present disclosure is used for a solid electrolyte layer in an all-solid-state battery, battery resistance is reduced.

The shape of the solid electrolyte sheet in a plane view is not limited and may be a quadrangle. The quadrangle may be, for example, a square or a rectangle.

The thickness of the solid electrolyte sheet depends on the thickness of the nonwoven fabric as a support and is not limited as long as it is equal to or larger than the thickness of the nonwoven fabric. From the viewpoint of, for example, further reducing battery resistance, the thickness of the solid electrolyte sheet is, for example, 50 µm or less, 30 µm or less, 20 µm or less, or 15 µm or less. The thickness of the solid electrolyte sheet is, for example, 1 µm or more or 10 µm or more. The thickness of the solid electrolyte sheet is preferably 1 µm to 50 µm.

### Support

The solid electrolyte sheet includes a nonwoven fabric as a support. The nonwoven fabric is a sheet-shaped object obtained not by weaving but by bonding or entangling fibers, and is a planar fiber assembly that achieves a predetermined level of structural strength by a physical method except weaving, knitting, and papermaking and/or a chemical method (JIS L0222: 2022). In the nonwoven fabric, a fiber assembly portion is present in which a plurality of fibers (single fibers) is agglomerated or fused. In the present disclosure, the fiber assembly portion in which single fibers are agglomerated or fused is regarded as one fiber, and the nonwoven fabric used in the present disclosure has an average fiber diameter, including a fiber diameter of a fiber assembly portion (in the present disclosure, sometimes referred to as an "assembly portion fiber diameter"), of larger than 6.0 µm and less than 16.0 µm.

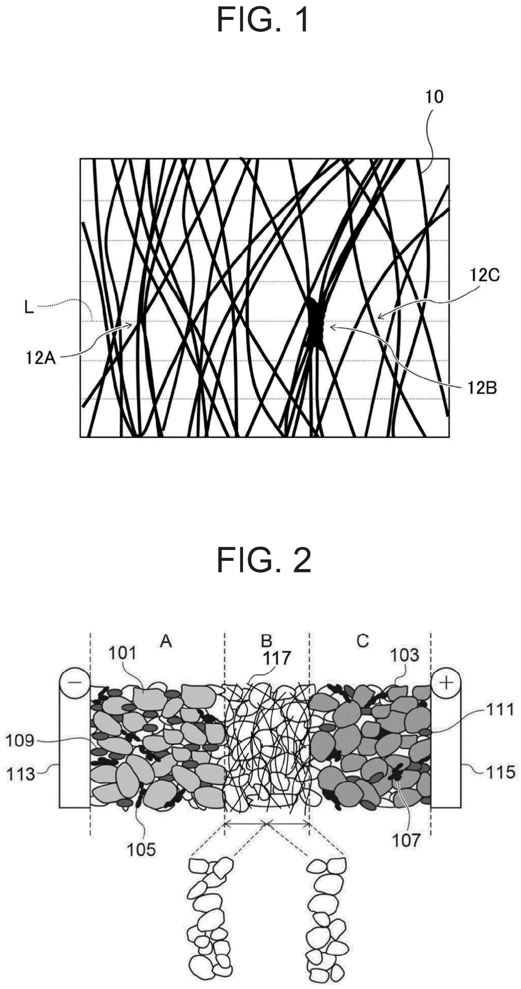

FIG. 1 is a schematic diagram for illustrating a method for measuring the fiber diameter of a nonwoven fabric in the present disclosure. The fiber diameter of a nonwoven fabric used in the present disclosure is measured by observation with a scanning electron microscope (SEM) at a magnification of 200 times (area of field of view: 0.5 mm × 0.4 mm). As shown in FIG. 1, an SEM image magnified 200 times is divided into eighths by seven equally-spaced straight lines L (shown by a dotted line in FIG. 1) parallel to each other. The lengths (fiber widths) of all the fiber clumps intersecting each of the straight lines L are measured. The nonwoven fabric is formed by overlapping fibers (single fibers) 10. In FIG. 1, reference numeral 12A denotes a portion where the fibers 10 are agglomerated, and reference numeral 12B denotes a portion where the fibers 10 are fused. The fiber assembly portion 12A, 12B is formed by assembly of the single fibers 10 but is regarded as one fiber, and the fiber diameter of the assembly portion 12A, 12B (the length (fiber width) of a fiber clump intersecting the straight line L) (sometimes referred to as a "fiber assembly portion diameter") is measured. Reference numeral 12C denotes a portion (single fiber portion) where the single fiber 10 intersects the straight line L, and in this portion, the fiber diameter of the single fiber 10 is measured. The measured values of the fibers oriented parallel to the straight lines L, that is, the measured values in a fiber-longitudinal direction are excluded. In the present disclosure, the average of fiber diameters measured in such a manner as described above is defined as an average fiber diameter.

From the viewpoint of the strength of the solid electrolyte sheet, the average fiber diameter of the nonwoven fabric may be 6.5 µm or more, 7.0 µm or more, or 8.0 µm or more. From the viewpoint of reducing battery resistance, the average fiber diameter of the nonwoven fabric may be 13.5 µm or less, 12.0 µm or less, or 11.0 µm or less. The average fiber diameter of the nonwoven fabric is preferably 6.5 µm to 13.5 µm.

The average fiber diameter including a fiber assembly portion diameter can be controlled by, for example, the type (material and single fiber diameter) of fiber used to produce the nonwoven fabric, a dispersant (type and amount), the mass per unit area of the nonwoven fabric, or the production conditions of the solid electrolyte sheet (pressing pressure, temperature).

The mass per unit area of the nonwoven fabric is not limited. From the viewpoint of the strength of the solid electrolyte sheet, the mass per unit area of the nonwoven fabric is, for example, 1 g/m² or more, 1.5 g/m² or more, or 2 g/m² or more. From the viewpoint of reducing battery resistance, the mass per unit area of the nonwoven fabric is, for example, 10 g/m² or less, 8 g/m² or less, or 6 g/m² or less. The mass per unit area of the nonwoven fabric is preferably 1 g/m² to 10 g/m². A method for measuring the mass per unit area of the nonwoven fabric is the same as a method described in Examples.

The ratio of the volume of the nonwoven fabric to the volume of the solid electrolyte sheet (in the present disclosure, sometimes referred to as a "volume ratio of the nonwoven fabric in the solid electrolyte sheet" or a "nonwoven fabric volume ratio") is not limited. The volume ratio of the nonwoven fabric in the solid electrolyte sheet is a ratio (%) of the volume of the nonwoven fabric to the total volume of the solid electrolyte sheet. From the viewpoint of the strength of the solid electrolyte sheet, the volume ratio of the nonwoven fabric in the solid electrolyte sheet is, for example, 8% or more, 10% or more, or 12% or more. From the viewpoint of reducing battery resistance, the volume ratio of the nonwoven fabric in the solid electrolyte sheet is, for example, 30% or less, 28% or less, or 25% or less. The volume ratio of the nonwoven fabric in the solid electrolyte sheet is preferably 8% to 30%. A method for measuring the volume ratio of the nonwoven fabric in the solid electrolyte sheet is the same as a method described in Examples.

The thickness of the nonwoven fabric is not limited and is, for example, 5 µm to 50 µm. When the thickness of the nonwoven fabric is 5 µm to 50 µm, the solid electrolyte sheet has higher strength, and the thickness of a solid electrolyte layer of an all-solid-state battery can be made smaller. As a result, battery resistance may further be reduced. From the viewpoint of the strength of the solid electrolyte sheet, the thickness of the nonwoven fabric may be 7 µm or more, 10 µm or more, or 15 µm or more. From the viewpoint of, for example, further reducing battery resistance, the thickness of the nonwoven fabric may be 40 µm or less, 30 µm or less, or 20 µm or less. A method for measuring the thickness of the nonwoven fabric is the same as a method described in Examples.

The type of the nonwoven fabric is not limited. Examples of the nonwoven fabric include a meltblown nonwoven fabric, a spunbonded nonwoven fabric, a carded nonwoven fabric, a parallel-laid nonwoven fabric, a cross-laid nonwoven fabric, a random-laid nonwoven fabric, a spunlaid nonwoven fabric, a flashspun nonwoven fabric, a chemical bonded nonwoven fabric, a hydroentangled nonwoven fabric, a needlepunched nonwoven fabric, a stitchbonded nonwoven fabric, a thermobonded nonwoven fabric, a burst fiber nonwoven fabric, a tow opening nonwoven fabric, and a film split nonwoven fabric. Among them, a thermobonded nonwoven fabric is preferred. A thermobonded nonwoven fabric has strong bonding strength between fibers and therefore has high strength even when its mass per unit area is small. Therefore, it is easy to obtain a nonwoven fabric used in the present disclosure with an average fiber diameter including a fiber diameter of a fiber assembly portion, mass per unit area, volume ratio, and thickness fall within their respective ranges described above.

The fiber diameter and fiber length of the single fiber constituting the nonwoven fabric are not limited. The single fiber may be a filament fiber or a staple fiber. The shape of the section of the single fiber is not limited, and may be, for example, circular, elliptical, or irregular.

The constituent material of the fiber may be, for example, a resin or glass. Examples of the resin include a polyester-based resin, a polyolefin-based resin, a polyamide-based resin, and a polyimide-based resin. An example of the polyester-based resin is polyethylene terephthalate (PET). Examples of the polyolefin-based resin include polyethylene (PE) and polypropylene (PP). Examples of the polyamide-based resin include nylon and aramid.

### Solid Electrolyte

The solid electrolyte sheet includes a solid electrolyte. The solid electrolyte is supported by a nonwoven fabric as a support. The solid electrolyte is not limited as long as it is supported by the nonwoven fabric, and may be present in the interior of the nonwoven fabric or may or may not cover the nonwoven fabric.

The form of the solid electrolyte may be, for example, particulate. The particle diameter (D50) of the solid electrolyte is preferably 3.0 µm or less. When the particle diameter of the solid electrolyte is 3.0 µm or less, battery resistance may be reduced as compared to when the particle diameter of the solid electrolyte exceeds 3.0 µm. The particle diameter of the solid electrolyte is preferably 0.05 µm or more, more preferably 0.2 µm or more, even more preferably 1.0 µm or more, particularly preferably 2.0 µm or more. The particle diameter of the solid electrolyte is more preferably 2.8 µm or less, more preferably 2.6 µm or less, particularly preferably 2.4 µm or less. The particle diameter of the solid electrolyte is preferably 0.05 µm to 3.0 µm. The particle diameter of the solid electrolyte is preferably smaller than the thickness of the nonwoven fabric. A method for measuring the particle diameter of the solid electrolyte is the same as a method described in Examples.

As the solid electrolyte, at least one solid electrolyte selected from the solid electrolyte group consisting of a sulfide solid electrolyte, an oxide solid electrolyte, and a halide solid electrolyte is preferably contained.

The sulfide solid electrolyte preferably contains sulfur (S) as a main component of an anionic element and more preferably contains, for example, an Li element, an A element, and an S element. The A element is at least one selected from the group consisting of P, As, Sb, Si, Ge, Sn, B, Al, Ga, and In. The sulfide solid electrolyte may further contain at least one of O and a halogen element. Examples of the halogen element (X) include F, Cl, Br, and I. The composition of the sulfide solid electrolyte is not limited and may be, for example, xLi₂S·(100 - x)P₂S₅ (70 ≤ x ≤ 80) or yLiI·zLiBr·(100 - y - z)(xLi₂S·(1 - x)P₂S₅) (0.7 ≤ x ≤ 0.8, 0 ≤ y ≤ 30, 0 ≤ z ≤ 30). The sulfide solid electrolyte may have a composition represented by the following general formula (1). ${Li}_{4 - x} {Ge}_{1 - x} {P}_{x} {S}_{4} \left(0<x<1\right)$ In the formula (1), at least part of Ge may be replaced with at least one selected from the group consisting of Sb, Si, Sn, B, Al, Ga, In, Ti, Zr, V, and Nb. Further, at least part of P may be replaced with at least one selected from the group consisting of Sb, Si, Sn, B, Al, Ga, In, Ti, Zr, V, and Nb. Part of Li may be replaced with at least one selected from the group consisting of Na, K, Mg, Ca, and Zn. Part of S may be replaced with a halogen. The halogen is at least one of F, Cl, Br, and I.

The sulfide solid electrolyte may be a publicly-known one and may be, for example, either glass-ceramic or an argyrodite-type solid electrolyte. The sulfide solid electrolyte may contain, for example, at least one selected from the group consisting of LiI-LiBr-Li₃PS₄, Li₂S-SiS₂, LiI-Li₂S-SiS₂, LiI-Li₂S-P₂S₅, LiI-Li₂O-Li₂S-P₂S₅, LiI-Li₂S-P₂O₅, LiI-Li₃PO₄-P₂S₅, Li₂S-GeS₂-P₂S₅, Li₂S-P₂S₅, Li₁₀GeP₂S₁₂, Li₄P₂S₆, Li₇P₃S₁₁, Li₃PS₄, Li₇PS₆, and Li₆PS₅X (X = Cl, Br, I). Among them, from the viewpoint of early detectivity of seal-out, the sulfide solid electrolyte is preferably an argyrodite-type sulfide solid electrolyte.

The argyrodite-type solid electrolyte contains an Li element, a P element, an S element, and an X element (X is a halogen). Examples of the X element include an F element, a Cl element, a Br element, and an I element. One type of X element or two or more types of X elements may be used. For example, the argyrodite-type solid electrolyte may be represented by a compositional formula of Li_{7 - y - z}PS_{6 - y - z}X¹_{y}X²_{z} (y ≥ 0, Z ≥ 0, 1 ≤ y + z ≤ 1.8) in which the types of X elements are distinguished: an X¹ element (halogen 1) and an X² element (halogen 2). Specific examples of the argyrodite-type solid electrolyte include, but are not limited to, Li₆PS₅Cl, Li₆PS₅Br, Li₆PS₅I, Li₆PS₅Cl_{0.75}Br_{0.25}, Li₆PS₅Cl_{0.5}Br_{0.5}, Li_{5.75}PS_{4.75}Cl_{1.25}, Li_{5.5}PS_{4.5}Cl_{1.5}.

The oxide solid electrolyte preferably contains oxygen (O) as a main component of an anionic element, and may contain, for example, Li, a Q element (Q represents at least one of Nb, B, Al, Si, P, Ti, Zr, Mo, W, and S) and O. Examples of the oxide solid electrolyte include a gamet-type solid electrolyte, a perovskite-type solid electrolyte, a NASICON-type solid electrolyte, an Li-P-O-type solid electrolyte, and an LiB-O-type solid electrolyte. Examples of the garnet-type solid electrolyte include Li₇La₃Zr₂O₁₂, Li_{7 - x}La₃(Zr_{2 - x}Nbₓ)O₁₂ (0 ≤ x ≤ 2), and Li₅La₃Nb₂O₁₂. Examples of the perovskite-type solid electrolyte include (Li, La)TiO₃, (Li, La)NbO₃, and (Li, Sr)(Ta, Zr)O₃. Examples of the NASICON-type solid electrolyte include Li(Al, Ti)(PO₄)₃ and Li(Al, Ga)(PO₄)₃. Examples of the Li-P-O-type solid electrolyte include Li₃PO₄ and LiPON (which is a compound obtained by replacing part of O in Li₃PO₄ with N), and examples of the LiB-O-type solid electrolyte include Li₃BO₃ and a compound obtained by replacing part of O in Li₃BO₃ with C).

The halide solid electrolyte is preferably a solid electrolyte containing Li, M, and X (M represents at least one of Ti, Al, and Y, and X represents F, Cl, or Br.). Specifically, Li_{6 - 3z}Y_{z}X₆ (X represents Cl or Br, and z satisfies 0 < z <2.) or Li_{6 - (4 - x)b}(Ti₁₋ₓAlₓ)_{b}F₆ (0 < x < 1, 0 < b ≤ 1.5) is preferred. The Li_{6 - 3z}Y_{z}X₆ is more preferably Li₃YX₆ (X represents Cl or Br.), even more preferably Li₃YCl₆ in terms of excellent lithium ion conductivity. The Li_{6 - (4} - _{x)b}(Ti_{1 - x}Alₓ)_{b}F₆ (0 < x < 1, 0 < b ≤ 1.5) is preferably contained together with a solid electrolyte such as a sulfide solid electrolyte from the viewpoint of, for example, preventing oxidative decomposition of the sulfide solid electrolyte.

### Binder

The solid electrolyte sheet may or may not contain a binder. Examples of the binder include a rubber-based binder and a fluoride-based binder. Examples of the rubber-based binder include butadiene rubber, hydrogenated butadiene rubber, styrene-butadiene rubber (SBR), hydrogenated styrene-butadiene rubber, nitrile-butadiene rubber, hydrogenated nitrile butadiene rubber, and ethylene propylene rubber. Examples of the fluoride-based binder include polyvinylidene fluoride (PVDF), a polyvinylidene fluoride-polyhexafluoropropylene copolymer (PVDF-HFP), polytetrafluoroethylene, and fluorine-containing rubber. When the solid electrolyte contains a binder, the content of the binder may be 0 parts by mass to 3 parts by mass relative to the total amount of the solid electrolyte.

### All-Solid-State Battery

An all-solid-state battery of the present disclosure includes a positive electrode layer, a negative electrode layer, and a solid electrolyte layer disposed between the positive electrode layer and the negative electrode layer. The solid electrolyte layer includes the solid electrolyte sheet of the present disclosure.

The all-solid-state battery of the present disclosure has such a configuration as described above, and therefore has high strength and reduced battery resistance. The reason for this effect is presumed to be the same as the reason for the effect of the solid electrolyte sheet described above but is not limited thereto.

When a set of the positive electrode layer, the solid electrolyte layer, and the negative electrode layer is regarded as a power generation unit, the all-solid-state battery may include only one power generation unit or two or more power generation units. When the all-solid-state battery includes two or more power generation units, these power generation units may be connected in series or in parallel.

### Solid Electrolyte Layer

The solid electrolyte layer includes the solid electrolyte sheet of the present disclosure and may be constituted from only the solid electrolyte sheet of the present disclosure. The solid electrolyte layer has been subjected to battery pressing.

The thickness of the solid electrolyte layer is 50 µm or less, 30 µm or less, 20 µm or less, or 15 µm or less from the viewpoint of further reducing battery resistance. The thickness of the solid electrolyte layer is 1 µm or more or 10 µm or more. The thickness of the solid electrolyte layer is preferably 1 µm to 50 µm.

The solid electrolyte layer has a history of being subjected to battery pressing. Each of the nonwoven fabric and the solid electrolyte included in the solid electrolyte sheet are less likely to be deformed due to battery pressing. Therefore, each of the nonwoven fabric and the solid electrolyte included in the solid electrolyte sheet after battery pressing and each of the nonwoven fabric and the solid electrolyte included in the solid electrolyte sheet before battery pressing can be regarded as the same.

The average fiber diameter of the nonwoven fabric included in the solid electrolyte layer is determined by, for example, washing the solid electrolyte layer using an organic solvent to separate only the nonwoven fabric and measuring the fiber diameters of the obtained nonwoven fabric in the same manner as described above. The particle diameter of the solid electrolyte included in the solid electrolyte layer is determined by, for example, observing the section of the solid electrolyte layer with a scanning electron microscope (SEM), randomly selecting particles of the solid electrolyte, and measuring the particle diameters of the particles to calculate the average of them.

The nonwoven fabric included in the solid electrolyte layer and at least one of the positive electrode layer and the negative electrode layer may be or may not be in direct contact with each other. Between the nonwoven fabric included in the solid electrolyte layer and at least one of the positive electrode layer and the negative electrode layer, another solid electrolyte layer may be disposed. When another solid electrolyte layer is disposed, the internal resistance of the all-solid-state battery is reduced. The another solid electrolyte layer contains a solid electrolyte and, if necessary, may contain a binder. The solid electrolyte and the binder may be the same as those described as examples of the solid electrolyte and the binder that may be contained in the solid electrolyte sheet. The another solid electrolyte layer usually has no electron conductivity. The another solid electrolyte layer includes no nonwoven fabric. The thickness of the another solid electrolyte layer is not limited.

### Positive Electrode Layer

The positive electrode layer contains a positive electrode active material. If necessary, the positive electrode layer may further contain at least one of a solid electrolyte, an electrical conducting material, and a binder.

The positive electrode layer preferably contains a lithium composite oxide as a positive electrode active material. The lithium composite oxide may contain at least one selected from the group consisting of F, Cl, N, S, Br, and I. The lithium composite oxide may have a crystal structure belonging to at least one space group selected from space groups R-3m, Immm, and P63-mmc (also referred to as P63mc or P6/mmc). The main arrangement of a transition metal, oxygen, and lithium in the lithium composite oxide may have an O2-type structure. An example of the lithium composite oxide having a crystal structure belonging to R-3m is a compound represented by LiₓMe_{y}O_{α}X_{β} (Me represents at least one selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si, and P, X represents at least one selected from the group consisting of F, Cl, N, S, Br, and I, x satisfies 0.5 ≤ x ≤ 1.5, y satisfies 0.5 ≤ y ≤ 1.0, α satisfies 1 ≤ α < 2, β satisfies 0 < β ≤ 1). Examples of the lithium composite oxide having a crystal structure belonging to Immm include a composite oxide represented by Liₓ₁M¹A¹₂ (x1 satisfies 1.5 ≤ x1 ≤ 2.3, M¹ includes at least one selected from the group consisting of Ni, Co, Mn, Cu, and Fe, A¹ includes at least oxygen, the ratio of oxygen in A¹ is 85 atomic% or more) (specifically, for example, Li₂NiO₂) and a composite oxide represented by Liₓ₁M^{1A}_{1 - x2}M^{1B}ₓ₂O_{2 - y}A²_{y} (0 ≤ x2 ≤ 0.5, 0 ≤ y ≤ 0.3, at least one of x2 and y is not 0, M^{1A} represents at least one selected from the group consisting of Ni, Co, Mn, Cu, and Fe, M^{1B} represents at least one selected from the group consisting of Al, Mg, Sc, Ti, Cr, V, Zn, Ga, Zr, Mo, Nb, Ta, and W, A2 represents at least one selected from the group consisting of F, Cl, Br, S, and P). An example of the lithium composite oxide having a crystal structure belonging to P63-mmc is a composite oxide represented by M1ₓM2_{y}O₂ (M1 represents an alkali metal (at least one of Na and K is preferred), M2 represents a transition metal (at least one selected from the group consisting of Mn, Ni, Co, and Fe is preferred), x + y satisfies 0 < x + y ≤ 2). An example of the lithium composite oxide having an O2-type structure is a composite oxide represented by Liₓ[Li_{α}(MnₐCo_{b}M_{c})_{1 - α}]O₂ (0.5 < x < 1.1, 0.1 < α < 0.33, 0.17 < a < 0.93, 0.03 < b < 0.50, 0.04 < c < 0.33, M represents at least one selected from the group consisting of Ni, Mg, Ti, Fe, Sn, Zr, Nb, Mo, W, and Bi), and a specific example of the composite oxide is Li_{0.744}[Li_{0.145}Mn_{0.625}Co_{0.115}Ni_{0.115}]O₂.

As the positive electrode active material, lithium iron phosphate (LiFePO₄, LFP), lithium manganese iron phosphate (LMFP), or the like may be used.

It is preferred that the positive electrode layer contains, in addition to the positive electrode active material, a solid electrolyte selected from the solid electrolyte group consisting of a sulfide solid electrolyte, an oxide solid electrolyte, and a halide solid electrolyte, and it is more preferred that at least part of the surface of the positive electrode active material is coated with a sulfide solid electrolyte, an oxide solid electrolyte, or a halide solid electrolyte. The solid electrolyte with which at least part of the surface of the positive electrode active material is coated is preferably LiNbO₃.

The positive electrode layer may contain an electrical conducting material. Examples of the electrical conducting material include a carbon material, a metallic particle, and an electrically conductive polymer. Examples of the carbon material include a particulate carbon material and a fibrous carbon material. Examples of the particulate carbon material include acetylene black (AB) and ketjen black (KB). Examples of the fibrous carbon material include carbon nanotubes (CNT) and carbon nanofibers (CNF).

The solid electrolyte and the binder used for the positive electrode layer may be the same as those described as examples of the solid electrolyte and the binder that may be contained in the solid electrolyte sheet.

The thickness of the positive electrode layer is not limited and is preferably 0.1 µm to 1000 µm.

The all-solid-state battery may further include a positive electrode current collector. The positive electrode current collector collects electric current from the positive electrode layer. The positive electrode current collector is disposed on the opposite side of the positive electrode layer from the solid electrolyte layer. Examples of the material of the positive electrode current collector include stainless steel, aluminum, nickel, iron, titanium, and carbon. The positive electrode current collector is preferably an aluminum alloy foil or an aluminum foil. The aluminum alloy foil or the aluminum foil may be produced using a powder. The positive electrode current collector is in the form of, for example, foil or mesh.

### Negative Electrode Layer

The negative electrode layer contains a negative electrode active material. If necessary, the negative electrode layer may contain at least one of a solid electrolyte, an electrical conducting material, and a binder. Examples of the negative electrode material include an Li-based active material, a carbon-based active material, an oxide-based active material, and an Si-based active material. Examples of the Li-based active material include metallic lithium and a lithium alloy. Examples of the carbon-based active material include graphite, hard carbon, and soft carbon. An example of the oxide-based active material is lithium titanate. Examples of the Si-based active material include elemental Si, an Si alloy, and silicon oxide.

The form of the negative electrode active material may be, for example, particulate. The particle diameter of the negative electrode active material is preferably 10 µm or more, more preferably 100 µm or more. The particle diameter of the negative electrode active material is preferably 50 µm or more, more preferably 20 µm or more. The particle diameter of the negative electrode active material is preferably 10 µm to 50 µm. A method for measuring the particle diameter of the negative electrode active material is the same as a method described in Examples.

The electrical conducting material, the solid electrolyte, and the binder used for the negative electrode layer may be the same as those described as examples of the electrical conducting material, the solid electrolyte, and the binder that may be contained in the positive electrode layer. The thickness of the negative electrode layer is not limited and is preferably 0.1 µm to 1000 µm.

The all-solid-state battery may further include a negative electrode current collector. The negative electrode current collector collects electric current from the negative electrode layer. The negative electrode current collector is disposed on the opposite side of the negative electrode layer from the solid electrolyte layer. Examples of the material of the negative electrode current collector include stainless steel, copper, nickel, and carbon. The negative electrode current collector may be in the form of, for example, foil or mesh.

### Battery Structure

The all-solid-state battery has a laminated structure of positive electrode/solid electrolyte layer/negative electrode. The positive electrode includes a positive electrode active material layer and a current collector, and the negative electrode includes a negative electrode active material layer and a current collector. The solid electrolyte layer may have a single-layer structure or a multi-layer structure having two or more layers. FIG. 2 is a schematic sectional view of an example of the all-solid-state battery. The section of the all-solid-state battery may have, for example, a structure shown in FIG. 2. A solid electrolyte layer B is supported by a support (nonwoven fabric) 117. The solid electrolyte layer B may have a double-layer structure as shown in FIG. 2. The all-solid-state battery shown in FIG. 2 includes a negative electrode including a negative electrode current collector 113 and a negative electrode active material layer A, the solid electrolyte layer B, and a positive electrode including a positive electrode current collector 115 and a positive electrode active material layer C. The negative electrode active material layer A contains a negative electrode active material 101, a conductive additive 105, and a binder 109. The positive electrode active material layer C contains a coated positive electrode active material 103, a conductive additive 107, and a binder 111, and the coated positive electrode active material 103 is obtained by coating the surface of a positive electrode active material with an LTAF electrolyte or an LiNbO₃ electrolyte. The all-solid-state battery may be configured by sealing the laminate end faces (side surfaces) of the laminated structure of positive electrode/solid electrolyte layer/negative electrode with a resin. The current collectors of the electrodes may be configured to have a buffer layer, an elastic layer, or a positive temperature coefficient (PTC) thermistor layer provided on the surface thereof.

### Exterior Body

The all-solid-state battery may further include an exterior body. The exterior body houses at least the power generation unit described above. Examples of the exterior body include a laminate-type exterior body and a case-type exterior body.

### Restraining Member

The all-solid-state battery may further include a restraining member. The restraining member applies a restraining pressure to the positive electrode layer, the solid electrolyte layer, and the negative electrode layer in a thickness direction. The restraining pressure is preferably 0.1 MPa or more, more preferably 1 MPa or more, even more preferably 5 MPa or more. The restraining pressure is preferably 100 MPa or less, more preferably 50 MPa or less, even more preferably 20 MPa or less. The restraining pressure is preferably 0.1 MPa to 100 MPa.

### Intended Use

The all-solid-state battery of the present disclosure is typically an all-solid-state lithium-ion secondary battery. The all-solid-state battery may be used as a power source for a vehicle, an electronic device, electric power storage, or the like. Examples of the vehicle include an electrified four-wheel vehicle, an electrified two-wheel vehicle, a petrol-driven vehicle, and a diesel vehicle. Examples of the electrified four-wheel vehicle include a battery electric vehicle (BEV), a plug-in hybrid electric vehicle (PHEV), and a hybrid electric vehicle (HEV). Examples of the electrified two-wheel vehicle include an electrified motorcycle and an electrically-assisted bicycle. Examples of the electronic device include handheld devices (e.g., smartphones, tablet computers, and audio players), portable devices (e.g., notebook computers and compact disc (CD) players), and mobile devices (e.g., electric power tools and professional-use video cameras). Among them, the all-solid-state battery of the present disclosure is preferably used as a drive power source for hybrid electric vehicles, plug-in hybrid electric vehicles, or battery electric vehicles.

Hereinbelow, the present disclosure will be described in more detail with reference to examples, but the invention of the present disclosure is not limited only to these examples.

### Measurement Methods

Methods for measuring the physical properties of materials used in examples and comparative examples are as follows.

### Average Fiber Diameter of Nonwoven Fabric

A sheet having a certain area was cut out from a nonwoven fabric. The sheet was observed with an SEM at a magnification of 200 times (observation area: 0.5 mm × 0.4 mm). Fiber diameters including the fiber diameters of fiber assembly portions were measured on the SEM image magnified 200 times by the method described above. The average of the fiber diameters was calculated to determine an average fiber diameter.

### Mass per Unit Area of Nonwoven Fabric

A sheet having a certain area was cut out from a nonwoven fabric. The mass of the sheet was measured to determine the mass per unit area of the nonwoven fabric.

### Strength of Solid Electrolyte Sheet

A release film was placed on the coated surface of a solid electrolyte sheet, a resultant was roll-pressed at a pressing pressure of 1 ton/cm, and the release film was removed to produce a freestanding solid electrolyte sheet. The freestanding solid electrolyte sheet was cut into strips having a size of width 5 mm × length 5 cm to measure tensile strength by a tensile test. In the test, a longitudinal direction (MD) was defined as a length direction.

### Particle Diameter

The particle diameter of a solid electrolyte was measured using a laser diffraction particle size distribution analyzer. Specifically, an object to be measured was dispersed in a dispersion medium, a volume-based particle size distribution was measured using a particle size distribution analyzer, and a particle diameter corresponding to 50% cumulative frequency in the obtained volume-based cumulative particle size distribution was defined as an average particle diameter (D50).

### Production of Nonwoven Fabrics (Supports)

PET nonwoven fabrics different in average fiber diameter, including also a fiber diameter of a fiber assembly portion, were produced by changing the fiber diameter of a fiber (single fiber) used to produce a nonwoven fabric or by changing the production process of a nonwoven fabric. The average fiber diameters of the respective produced nonwoven fabrics are shown in Table 1.

### Example 1

### Production of Solid Electrolyte Sheet Including Nonwoven Fabric

A nonwoven fabric having a mass per unit area of 3 g/m² was produced using a PET fiber having a single fiber diameter of 5 µm. A solid electrolyte sheet including a nonwoven fabric was produced using the nonwoven fabric produced above as a support for a solid electrolyte. At this time, the longitudinal direction of the nonwoven fabric was defined as a machine direction. As a sulfide solid electrolyte, an Li₂S-P₂S₅-based glass-ceramic solid electrolyte having an average particle diameter (D50) of 1 µm was used.

A styrene-butadiene rubber (SBR)-based binder was weighed out to 3% by mass relative to the sulfide solid electrolyte, and the sulfide solid electrolyte and the SBR were blended with tetralin such that a solid content was 40% by mass. A resultant was subjected to ultrasonic dispersion treatment using an ultrasonic dispersing device for 1 minute to obtain a solid electrolyte paste. Then, the nonwoven fabric was placed on a 25-µm-thick release film (Si-coated PET film), and the obtained solid electrolyte paste was evenly applied by blade coating using a commercially-available applicator such that a mass per unit area of 3.0 mg/cm² was achieved. Then, the coating was dried at 100°C for 60 minutes to obtain, on the release film, a solid electrolyte sheet including the nonwoven fabric. The volume ratio of the nonwoven fabric to the solid electrolyte sheet was calculated from the masses per unit area and the specific gravities of the solid electrolyte and the nonwoven fabric.

### Production of Positive Electrode Layer

As a positive electrode active material, an LiNi_{0.8}Co_{0.15}Al_{0.05}O₂ powder having an average particle diameter (D50) of 3 µm was used. The surface of the positive electrode active material was coated with LiNbO₃ by a sol-gel method. As a solid electrolyte, the same one as used for the solid electrolyte sheet was used. The positive electrolyte active material and the sulfide solid electrolyte were weighed out to achieve a blending ratio between the positive electrode active material and the sulfide solid electrolyte of "positive electrode active material/sulfide solid electrolyte = 7/3 (volume ratio)". An electrical conducting material (VGCF) was weighed out to 3% by mass relative to the amount of the positive electrode active material. Further, a styrene-butadiene rubber (SBR)-based binder was weighed out to 1% by mass. They were blended with tetralin such that a solid content of 65% by mass was achieved. A resultant was subjected to ultrasonic dispersion treatment using an ultrasonic dispersing device for 1 minute to obtain a composition (positive electrode paste) for forming a positive electrode active material layer. Then, the obtained positive electrode paste was evenly applied onto a positive electrode current collector formed of aluminum foil having a thickness of 15 µm by blade coating using a commercially-available applicator such that a mass per unit area of 12 mg/cm² was achieved. Then, the coating was dried at 100°C for 60 minutes to obtain a positive electrode in which a positive electrode active material layer was formed on the positive electrode current collector formed of aluminum foil.

### Production of Negative Electrode Layer

As a negative electrode active material, an Li₄Ti₅O₁₂ powder having an average particle diameter (D50) of 1 µm was used. As a sulfide solid electrolyte, Li₂S-P₂S₅-based glass-ceramic was used. The negative electrode active material and the sulfide solid electrolyte were weighed out to achieve a blending ratio between the negative electrode active material and the sulfide solid electrolyte of "negative electrode active material/sulfide solid electrolyte = 6/4 (volume ratio)". An electrical conducting material (VGCF) was weighed out to 1% by mass. Further, a styrene-butadiene rubber (SBR)-based binder was weighed out to 2% by mass. The negative electrode active material, the sulfide solid electrolyte, the electrical conducting material, and the SBR were blended with tetralin such that a solid content of 60% by mass was achieved. A resultant was subjected to ultrasonic dispersion treatment using an ultrasonic dispersing device for 1 minute to obtain a composition (negative electrode paste) for forming a negative electrode active material layer. Then, the obtained negative electrode paste was evenly applied onto a negative electrode current collector formed of surface-roughened Ni foil having a thickness of 20 µm by blade coating using a commercially-available applicator such that a mass per unit area of 19 mg/cm² was achieved. Then, the coating was dried at 100°C for 60 minutes to obtain a negative electrode in which a negative electrode active material layer for battery was formed on the negative electrode current collector formed of surface-roughened Ni foil.

### Production of All-Solid-State Battery

On the Ni foil of the negative electrode layer, the solid electrolyte sheet having the same shape as the Ni foil was placed, and a resultant was pressed at a pressing pressure of 1 ton/cm. Then, the release film attached to the solid electrolyte layer laminated on the negative electrode was removed, and the positive electrode including the aluminum foil was placed on the solid electrolyte layer laminated on the negative electrode, and a resultant was pressed at a pressing pressure of 4 ton/cm. The thus obtained laminated electrode body was hermetically sealed by an exterior body formed of an aluminum laminate film previously equipped with positive and negative terminals to produce an all-solid-state battery for testing (all-solid-state lithium-ion secondary battery) of Example 1.

### Example 2

A PET nonwoven fabric having a mass per unit area of 5 g/m² was produced by adjusting the amount of a dispersant to enhance fiber dispersibility. A solid electrolyte sheet was produced in the same manner as in Example 1 except that this PET nonwoven fabric was used as a support. An all-solid-state battery (all-solid-state lithium-ion secondary battery) for testing of Example 2 was produced in the same manner as in Example 1 except that the solid electrolyte sheet produced above was used.

### Example 3

A PET nonwoven fabric, a solid electrolyte sheet, and an all-solid-state battery (all-solid-state lithium ion secondary battery) for testing of Example 3 were produced in the same manner as in Example 1 except that a PET fiber having a single fiber diameter of 3 µm was used.

### Comparative Example 1

A PET nonwoven fabric was produced in the same manner as in Example 1 except that the pressing pressure in the production of the nonwoven fabric was made stronger than that in Example 1 to fuse the fibers such that the mass per unit area of the PET nonwoven fabric was 4 g/m². An all-solid-state battery (all-solid-state lithium-ion secondary battery) for testing of Comparative Example 1 was produced in the same manner as in Example 1 except that the PET nonwoven fabric produced above was used.

### Comparative Example 2

A PET nonwoven fabric was produced in the same manner as in Example 1 except that a PET fiber having a single fiber diameter of 2 µm was used in the production of the nonwoven fabric and the mass per unit area of the PET nonwoven fabric was 4 g/m². An all-solid-state battery (all-solid-state lithium-ion secondary battery) for testing of Comparative Example 2 was produced in the same manner as in Example 1 except that the PET nonwoven fabric produced above was used.

### Battery Evaluation

### Battery Resistance Measurement

Constant current-constant voltage charge and discharge was performed on each of the produced all-solid-state batteries for testing two cycles at an upper limit voltage of 4.4 V, a lower limit voltage of 1.6 V, and a rate of 1/3C, and then the state of charge (SOC) of the battery was adjusted to 20% at a rate of 1/3C. An alternating-current impedance was measured at 10 mV over a range of 0.1 to 10⁶ Hz, and a value at an intersection between the Cole-Cole plot and the real axis was defined as resistance. The measurement results are shown in Table 1.

**[Table 1]**

| | Average Fiber Diameter Including Diameter of Fiber Assembly Portion Formed by Agglomeration or Fusion | Battery Resistance | Strength of Solid Electrolyte Sheet | Volume Ratio of Nonwoven Fabric |
|---|---|---|---|---|
| | µm | Ω | N/5mm | % |
| Comparative Example 1 | 17.5 | 10.8 | 1.8 | 18 |
| Example 1 | 13.5 | 8.4 | 1.5 | 14 |
| Example 2 | 10.7 | 7.1 | 2.0 | 22 |
| Example 3 | 6.5 | 6.9 | 1.2 | 14 |
| Comparative Example 2 | 5.8 | 6.7 | 0.1 | 18 |

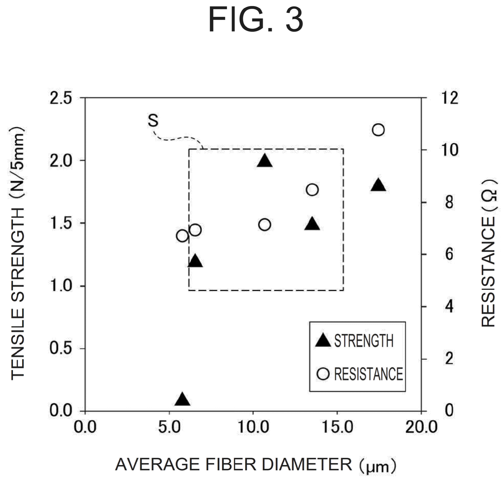

FIG. 3 is a graph showing a relationship among the average fiber diameter of the nonwoven fabric included in the solid electrolyte sheet produced in each of Examples and Comparative Examples, the strength of the solid electrolyte sheet, and the resistance. In the case of the solid electrolyte sheets of Examples 1 to 3, the average fiber diameter, including a fiber diameter of a fiber assembly portion, of the nonwoven fabric as a support is larger than 6.0 µm and less than 16.0 µm. These solid electrolyte sheets have a strength of 1.0 N/5 mm or more and 3.0 N/5 mm or less, and the resistance is 10.0 Ω or less (within a range denoted by S in FIG. 3). Therefore, a balance between strength and resistance is excellent.

On the other hand, in the case of the solid electrolyte sheet of Comparative Example 1, the average fiber diameter of the nonwoven fabric is 16.0 µm or more. The solid electrolyte sheet has a strength in the range of 1.0 N/5 mm or more and 3.0 N/5 mm or less and is therefore excellent in strength. However, the resistance of the all-solid-state battery exceeds 10.0 Ω. In the case of the solid electrolyte sheet of Comparative Example 2, the nonwoven fabric has an average fiber diameter of 6.0 µm or less. The all-solid-state battery has a low resistance of 10.0 Ω or less, but the solid electrolyte sheet has a strength of 0.1 N/5 mm and is therefore poor in strength.

Hereinbelow, some of embodiments of the present disclosure will be described as examples. However, embodiments of the present disclosure are not limited thereto.
<1> A solid electrolyte sheet including:
   a support that is a nonwoven fabric with an average fiber diameter larger than 6.0 µm and less than 16.0 µm, the average fiber diameter including a fiber diameter of a fiber assembly portion in which a plurality of fibers is agglomerated or fused; and
   a solid electrolyte supported by the support.
<2> The solid electrolyte sheet according to <1>, wherein the average fiber diameter is 6.5 µm or more and 13.5 µm or less.
<3> The solid electrolyte sheet according to <1> or <2>, wherein the solid electrolyte contains a sulfide solid electrolyte.
<4> The solid electrolyte sheet according to any one of <1> to <3>, wherein the solid electrolyte sheet has a strength of 1.0 N/5 mm or more and 3.0 N/5 mm or less.
<5> The solid electrolyte sheet according to any one of <1> to <4>, wherein a ratio of a volume of the support to a volume of the solid electrolyte sheet is 30% or less.
<6> The solid electrolyte sheet according to any one of <1> to <5>, wherein the support has a mass per unit area of 1 g/m² or more and 10 g/m² or less.
<7> An all-solid-state battery including a positive electrode layer, a negative electrode layer, and a solid electrolyte disposed between the positive electrode layer and the negative electrode layer, wherein
   the solid electrolyte layer includes the solid electrolyte sheet according to any one of <1> to <6>.

## Claims

1. A solid electrolyte sheet comprising:
a support (117) that is a nonwoven fabric with an average fiber diameter larger than 6.0 µm and less than 16.0 µm, the average fiber diameter including a fiber diameter of a fiber assembly portion (12A, 12B) in which a plurality of fibers (10) is agglomerated or fused; and
a solid electrolyte supported by the support (117).

2. The solid electrolyte sheet according to claim 1, wherein the average fiber diameter is 6.5 µm or more and 13.5 µm or less.

3. The solid electrolyte sheet according to claim 1 or 2, wherein the solid electrolyte contains a sulfide solid electrolyte.

4. The solid electrolyte sheet according to claim 1 or 2, wherein the solid electrolyte sheet has a strength of 1.0 N/5 mm or more and 3.0 N/5 mm or less.

5. The solid electrolyte sheet according to claim 1 or 2, wherein a ratio of a volume of the support (117) to a volume of the solid electrolyte sheet is 30% or less.

6. The solid electrolyte sheet according to claim 1 or 2, wherein the support (117) has a mass per unit area of 1 g/m² or more and 10 g/m² or less.

7. An all-solid-state battery comprising:
a positive electrode layer (C),
a negative electrode layer (A), and
a solid electrolyte layer (B) disposed between the positive electrode layer (C) and the negative electrode layer (A), wherein the solid electrolyte layer (B) includes the solid electrolyte sheet according to claim 1 or 2.
